# FASCICULE DE BREVET EUROPEEN

(11) **EP 0 890 405 B1**
(45) Date de publication et mention de la délivrance du brevet: **09.04.2003**
(21) Numéro de dépôt: 97111520.9
(22) Date de dépôt: 08.07.1997
(51) Int. Cl.: B23D 65/00

(54) **Procédé de fabrication d'un outil de coupe circulaire et machine pour la mise en oeuvre de ce procédé**
Verfahren zur Herstellung eines kreisförmigen Schneidwerkzeugs und Maschine zur Durchführung des Verfahrens
Method for manufacturing a circular cutting tool and machine for carrying out the method

(43) Date de publication de la demande: 13.01.1999
(73) Titulaire: Visilit, Alfred, 5532 Remich (LU)
(72) Inventeur: Visilit, Alfred, 5532 Remich (LU)
(74) Mandataire: Schmitt, Armand

(56) Documents cités:
- EP-A- 0 754 519
- FR-A- 2 365 398
- GB-A- 1 010 969
- US-A- 3 034 379
- US-A- 3 315 548
- US-A- 4 562 754
- PATENT ABSTRACTS OF JAPAN vol. 004, no. 092 (M-018), 3 juillet 1980 & JP 55 048522 A (HITACHI ), 7 avril 1980,
- PATENT ABSTRACTS OF JAPAN vol. 012, no. 081 (M-676), 15 mars 1988 & JP 62 220294 A (MITSUBISHI ELECTRIC CORP), 28 septembre 1987,

## Description

La présente invention concerne de façon générale un outil de coupe circulaire, son procédé de fabrication et une machine pour la mise en oeuvre de ce procédé. Elle est plus spécialement applicable à une lame de scie circulaire de grand diamètre, telle qu'utilisée pour la coupe à chaud ou à froid de profilés métalliques, notamment de blooms, billettes, poutrelles en acier, ronds, rails et tubes à la sortie de trains de laminoir. Elle est également applicable à une lame de cisaille circulaire de grand diamètre, telle qu'utilisée pour refendre des tôles métalliques.

Les lames de scie circulaire utilisées pour le débit sur les trains de laminoir d'aciéries sont des lames monobloc en acier spécial, ayant une limite élastique et un coefficient d'allongement élevé. Il existe en principe deux catégories principales de ces lames de scie circulaire monobloc:
a) les lames pour coupe à froid, utilisées pour des températures de coupes jusqu'à 600°C. Il s'agit le plus souvent de lames en acier chrome-molybdène ayant subi soit un traitement thermique monobloc, soit un traitement à la flamme ou un traitement à induction limités à la denture;
b) les lames pour coupe à chaud, utilisées pour des températures de coupes de 600°C à 1200°C. Il s'agit le plus souvent de lames en acier mangano-silicieux, ayant subi soit un traitement thermique monobloc, soit un traitement à la flamme ou un traitement à induction limités à la denture.

Il convient de remarquer qu'un traitement thermique limité à la denture a l'avantage de ne pas affecter le corps de la lame de scie, qui garde ainsi ses qualités mécaniques originales (élasticité et allongement).

Pour la coupe des métaux à froid, il est aussi connu d'utiliser des lames de scies munies de segments en acier spécial, qui sont rivetés sur un disque en acier au carbone. Cependant, ces lames de scie à segments ne sont pas utilisables pour la coupe à chaud et ne permettent que des vitesses de coupe inférieures à 30 m/mn (vitesse périphérique à la denture), alors que les lames de scie à chaud permettent des vitesses de coupe de l'ordre de 100 m/s.

On utilise également des lames de scies à pastilles à carbure pour sectionner des profilés d'acier. Ces lames à pastilles à carbure permettent de travailler avec des vitesses de coupe de 80 à 600 m/mn, c'est-à-dire des vitesses de coupe au moins dix fois moins élevées que les lames de scies monobloc. Les lames à pastilles ne sont en outre pas utilisables pour le débit à chaud.

Du document FR-A-2365398 on connaît une lame de scie comportant trois zone concentriques unies les unes aux autres par soudage. La zone extérieure est en acier rapide et la zone intérieure en acier à outils. La zone intermédiaire est en acier d'une qualité telle qu'il empêche la diffusion des atomes de carbone à partir de l'acier à outils de la zone intérieure vers l'acier rapide de la zone extérieure. La zone extérieure et la zone intermédiaire sont formées à partir de bandes droites longues avancées de façon continue à travers une chambre à vide, dans laquelle elle sont soudées l'une à l'autre par faisceau d'électrons. Après soudage, les bandes sont coupées à la longueur voulue et sont mises en forme d'anneau. Ensuite, cet anneau est uni à la zone intérieure en forme de disque par un procédé classique de soudage, par exemple par soudage au plasma ou par soudage à l'arc. Ce soudage est effectué à l'air avec du métal d'apport, de sorte que l'ajustage entre l'anneau des bandes extérieures unies et le disque intérieur ne demande pas la précision qui serait nécessaire dans le cas du soudage au faisceau d'électrons. Le document mentionne encore qu'il n'est pas exclu de remplacer le soudage au faisceau d'électrons des deux bandes par une autre méthode soudage qui ne nécessite pas de métal d'apport, comme par exemple un soudage par résistance ou un soudage du type laser.

La présente invention a pour objet un procédé simple pour fabriquer une ébauche un outil de coupe circulaire comprenant un disque support et une couronne d'un acier spécial.

Il sera apprécié que le procédé selon l'invention permet de fabriquer notamment une lame de scie circulaire permettant une vitesse de coupe élevée et une bonne tenue de coupe, qui est en outre particulièrement adaptée pour la coupe à chaud et à froid de métaux, notamment de produits en acier à section importante sur les trains de laminoir.

Le procédé selon l'invention permet en outre de fabriquer une lame de cisaille ayant des caractéristiques de coupe améliorées.

Une lame de scie circulaire fabriquée selon l'invention comprend un disque support constitué d'un acier d'une première qualité. Il s'agit par exemple d'un acier au carbone ayant d'excellentes qualités d'allongement, d'élasticité et de résistance, mais pas nécessairement les qualités de base requises pour la coupe. Au bord de ce disque support est soudée par rayon laser une barre cintrée, constituée d'un acier d'une deuxième qualité. Il s'agit d'un acier spécial, par exemple d'un acier à outils ou d'un acier rapide, choisi principalement en fonction de ses bonnes qualités de coupe et de résistance à l'abrasion. Le soudage par rayon laser, qui produit au niveau du joint soudé une fusion intégrale des deux aciers, garantit une jonction parfaite des deux aciers de qualités souvent fort différentes. En usinant ensuite la denture de scie dans la couronne en acier spécial, on obtient une lame de scie circulaire composite, avec laquelle on peut travailler à des vitesses de coupe égales, voire même supérieures, à celles préconisées pour les lames de scie circulaire monobloc actuelles. Grâce à un choix adéquat de l'acier de la barre cintrée, on peut sensiblement augmenter la durée de coupe entre deux affûtages, ce qui augmente naturellement le rendement. De plus, une meilleure tenue dans le temps de la denture procure aussi une meilleure qualité de coupe, c'est-à-dire produit moins de bavures sur les pièces coupées. Il sera encore apprécié, qu'une lame de scie composite fabriquée selon l'invention a - à des vitesses de coupe élevées - aussi un meilleur comportement vibratoire et acoustique qu'une lame de scie monobloc classique. Par un choix judicieux des aciers utilisés pour la fabrication de la lame de scie composite, on peut en outre optimiser les propriétés thermiques de cette lame. Reste enfin à noter que l'invention permet d'atteindre un prix de revient très compétitif pour les lames de scie grand diamètre. En effet, la plupart des aciers spéciaux, qui ont des propriétés de coupe intéressantes, sont disponibles sur le marché quasi exclusivement dans des formats standards de faible largeur. Ces formats permettent aisément la découpe des barres à cintrer selon l'invention, mais ils ne permettraient pas la découpe d'une ébauche pour une lame de scie grand diamètre. De même, si l'on réalisait la couronne extérieure d'une telle scie à l'aide de segments annulaires, la faible largeur des tôles nécessiterait le recours à des segments annulaires relativement petits, et par conséquent de nombreuses soudures dans le sens radial entre les différents éléments. Il sera dès lors apprécié que la fabrication de lames de scie circulaire de grand diamètre selon la présente invention, ne nécessite pas de laminage de tôles en acier spécial de largeur non standard, simplifie les travaux de soudage et assure un minimum de discontinuités dans la couronne de coupe.

La largeur de la barre est de préférence choisie de façon à ce qu'elle déborde de chaque côté le disque. Ceci permet de conférer à la denture une dépouille latérale, sans devoir réduire l'épaisseur du disque support par usinage. Une telle dépouille latérale réduit naturellement le frottement de la lame sur la pièce, ce qui diminue la consommation d'énergie de la scie et l'échauffement de la lame, et garantit une meilleure qualité de coupe.

Une lame de cisaille circulaire fabriquée selon la présente invention comprend aussi un disque support d'un acier d'une première qualité et une barre cintrée d'un acier d'une deuxième qualité, soudée autour du disque support par rayon laser. De ce qui a été dit plus haut en rapport avec les avantages d'une lame de scie circulaire fabriquée selon la présente invention, l'homme de l'art déduira aisément les avantages principaux d'une lame de cisaille circulaire fabriquée selon la présente invention.

Le procédé pour fabriquer une ébauche d'une lame de scie ou de cisaille circulaire selon la présente invention comprend deux étapes principales:
1. cintrage d'une barre en acier autour d'un disque en acier;
2. soudage de la barre en acier cintrée au bord d'un disque en acier au moyen d'un rayon laser, par fusion des deux aciers.

La barre est cintrée autour du bord du disque support en entraînant ce dernier en rotation et en appliquant la barre fermement contre le bord du disque support sur une distance angulaire d'environ 180° en amont d'un point de soudage fixe dans l'espace, afin que le frottement entre le bord du disque et la barre puisse contribuer à la synchronisation de la vitesse de la barre et du bord du disque au point de soudage.

Au début de son cintrage la barre est préchauffée, de préférence à une température de 200° à 300°C, afin de faciliter son cintrage. Ensuite, dans une deuxième étape, la barre et le bord du disque support sont portés à une température plus élevée, de préférence jusqu'à 500°C, pour garantir des conditions optimales de soudage.

Après soudage, l'ébauche de la lame de scie ou de cisaille circulaires est soumise à un recuit de stabilisation.

Pour fabriquer une lame scie circulaire, on fabrique d'abord une ébauche de la lame scie circulaire selon un procédé tel que décrit plus haut, et on usine ensuite une denture dans la barre cintrée soudée au disque support, la géométrie de la denture étant choisie en fonction du produit à couper.

Si la barre soudée au disque support déborde le disque de chaque côté, on peut, de préférence avant d'usiner la denture, usiner les flancs latéraux de la barre soudée au disque, de façon à ce qu'elle présente une section trapézoïdale, dont la largeur augmente à partir de la soudure vers la périphérie. On obtient ainsi, avec un minimum d'usinage, une dépouille latérale importante.

Après usinage l'on soumet ordinairement la denture à une trempe, pour obtenir une dureté adaptée au produit à couper.

La fabrication d'une lame de cisaille circulaire se fait aussi à l'aide d'une ébauche obtenue selon un procédé tel que décrit plus haut. Elle ne nécessite bien entendu pas d'usinage d'une denture, mais l'on soumet la couronne périphérique de l'ébauche à un usinage final, comprenant par exemple une rectification des flancs et de la surface périphérique, un affûtage et éventuellement un usinage d'une dépouille.

Une machine pour fabriquer une ébauche de scie ou de cisaille circulaire, selon un procédé décrit plus haut comprend: un support rotatif pour y monter le disque support; des moyens de guidage disposés autour du bord dudit disque support monté sur le support rotatif, de façon à recevoir la barre, la cintrer et l'appliquer contre le bord; et une tête de soudage laser disposée en aval desdits moyens de guidage.Les moyens de guidage entourent le bord du disque sur une longueur angulaire d'environ 180°.

La machine comprend en outre avantageusement des moyens d'entraînement en translation de la barre, lesquels sont agencés de façon à pouvoir injecter la barre dans les moyens de guidage.

Au moins un dispositif de chauffage assure un préchauffage de la barre et du bord du disque dans cette machine.

D'autres caractéristiques et avantages de l'invention sont déductibles de la description détaillée qui suit. Cette description fournit, à titre non limitatif, des exemples d'exécution de l'invention en se basant sur les Figures en annexe, qui représentent plus particulièrement:
- Figure 1:: une vue en plan d'une ébauche utilisée pour la fabrication d'une lame de scie ou de cisaille circulaires;
- Figure 2:: une coupe selon la ligne de coupe 2-2 dans la Figure 1;
- Figure 3:: une coupe similaire à la coupe de la Figure 2, après usinage pour former une lame de scie circulaire;
- Figure 4:: une coupe similaire à la coupe de la Figure 2, après usinage pour former une lame de cisaille circulaire;
- Figure 5:: une vue en élévation d'une machine pour fabriquer des ébauches utilisées pour la fabrication de lames de scie ou cisaille circulaires;
- Figure 6:: une vue en plan de la machine selon la Figure 5;
- Figure 7:: une deuxième vue en élévation de la machine selon la Figure 5.

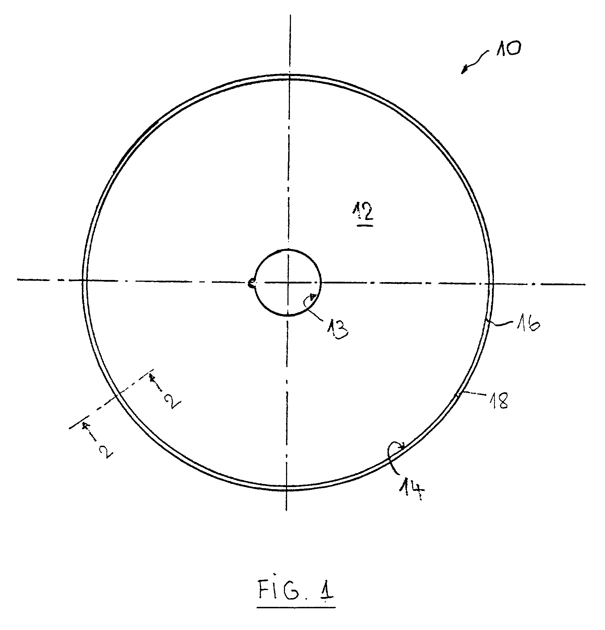

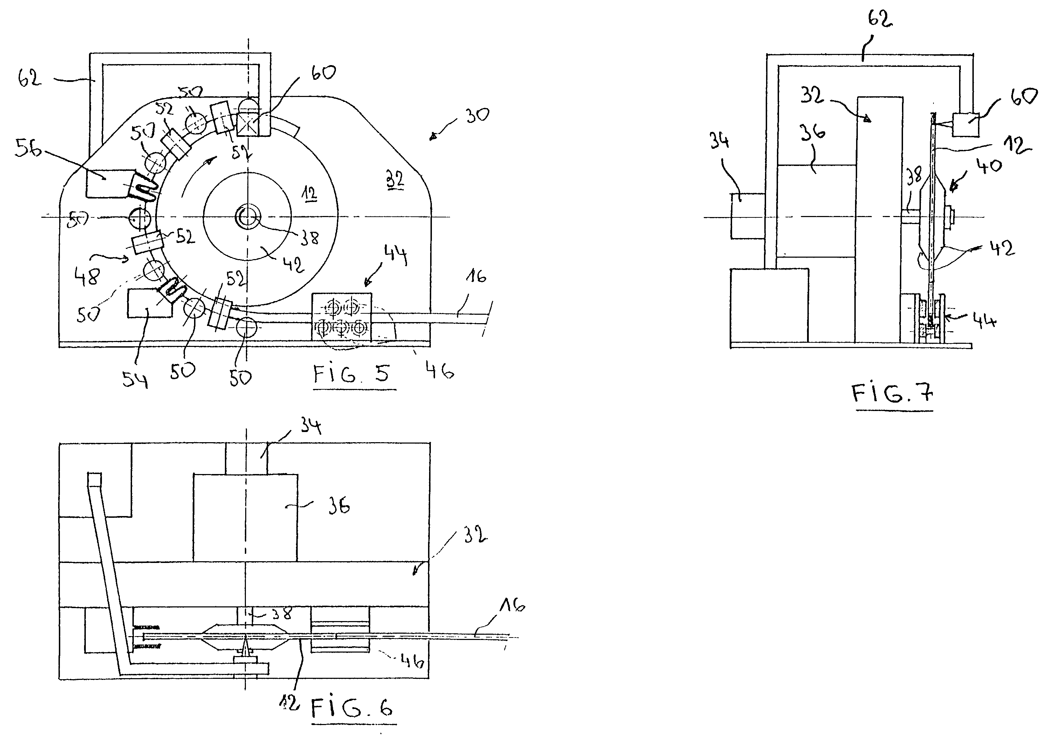

Sur la Figure 1 on voit une vue en plan d'une ébauche 10, qui peut être utilisée pour fabriquer soit une lame de scie circulaire, soit une lame de cisaille circulaire. Cette ébauche 10 comprend un disque support 12 constitué d'un acier d'une première qualité. Il s'agit par exemple d'un acier au carbone ayant d'excellentes qualités d'allongement, d'élasticité et de résistance, mais pas nécessairement de bonnes qualités de coupe. Le disque support 12 est muni d'un alésage central 13, qui sert pour le montage ultérieur de la lame de scie sur une scie circulaire, respectivement de la lame de cisaille sur une cisaille circulaire, mais qui sera aussi utilisé, comme on le verra lors de la description de la Figure 5, pour monter le disque support 12 lui-même sur une machine 30 utilisée pour la fabrication de l'ébauche 10.

Au bord périphérique 14 du disque support 12 est soudée par rayon laser une barre cintrée 16. Cette barre 16 est constituée d'un acier spécial, par exemple d'un acier à outils ou d'un acier rapide, choisi principalement en fonction de ses bonnes qualités de coupe, de résistance à l'abrasion et, le cas échéant, en fonction de sa résistance à des températures élevées. La barre cintrée 16 a une longueur qui correspond au périmètre du disque 12, de sorte qu'elle forme autour du bord du disque 12 une couronne continue, qui présente une seule soudure radiale 18, située au niveau du raccord des deux bouts de la barre cintrée 16. Il est cependant aussi envisageable de diviser la couronne extérieure en plusieurs segments, constitués d'aciers de différentes qualités. Dans ce cas, ces segments sont avantageusement soudés bout à bout pour obtenir une barre composite à cintrer et à souder au bord du disque support.

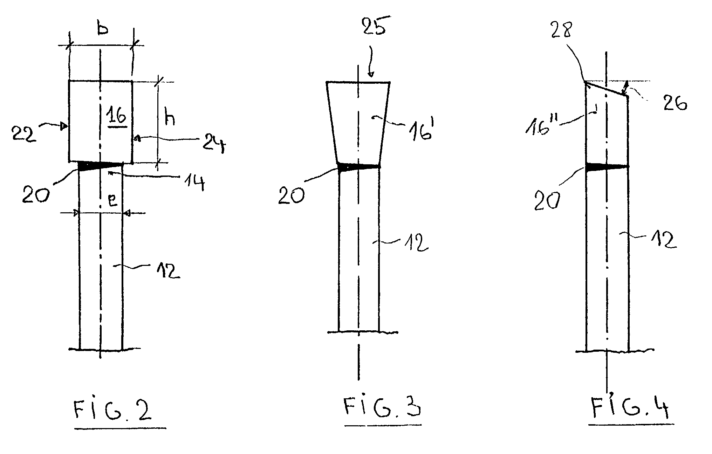

Sur la Figure 2 on voit une coupe radiale à travers la barre cintrée 16 soudée au bord périphérique 14 du disque 12. Le soudage par rayon laser, qui produit au niveau du joint soudé 20 une fusion intégrale des deux aciers, garantit une jonction parfaite des deux aciers de qualités souvent fort différentes. La largeur "b" de la barre 16 est de préférence légèrement supérieure à l'épaisseur "e" du disque 12 au niveau de son bord périphérique 14, de sorte que la barre 16 déborde de chaque côté le disque support 12. Notons à titre d'exemple, que pour les lames de scie circulaires, qui ont un diamètre de 500 à 1500 mm et qui sont utilisées sur des trains de laminoir pour la coupe à chaud ou à froid de poutrelles, cornières, rails, blooms, ronds, billettes, tubes, la hauteur "h" de la barre se situe typiquement entre 15 et 30 mm, la largeur "b" typiquement entre 10 et 20 mm et la dépouille latérale entre 2 et 4 mm.

Sur la Figure 3 on voit la même coupe que sur la Figure 2, après usinage pour former une denture de scie 16' dans la couronne périphérique de l'ébauche 10, c'est-à-dire dans la barre cintrée 16 soudée au disque support 12. La forme des dents de la denture 16' est choisie en fonction du produit à couper. En comparant la Figure 2 à la Figure 1, on remarque que le débordement latéral de la barre 16 par rapport au disque support 12 a permis d'usiner les flancs latéraux 22 et 24 de la barre 16 soudée au disque support 12, de façon à ce que la couronne périphérique formant la denture de scie 16' ait une section trapézoïdale, dont la largeur augmente à partir de la soudure 20 vers la surface périphérique 25 de la denture 16'. On confère ainsi à la lame de scie circulaire une dépouille latérale de chaque côté.

Sur la Figure 4 on voit la même coupe que sur la Figure 2, après usinage ayant transformé la barre cintrée 16 soudée au disque support 12 en une lame de cisaillement 16" circulaire. D'abord une dépouille 26 a été usinée dans la surface périphérique 25 de la couronne 16", puis les flancs 22 et 24 et la surface périphérique ont été rectifiés, avant d'affûter une arête de coupe 26.

Reste à noter que si l'on veut obtenir des hauteurs élevées de la couronne périphérique constituée dudit acier spécial, il est préférable de souder par rayon laser d'abord une première barre cintrée au bord périphérique du disque support et de souder ensuite une deuxième barre cintrée sur le dos périphérique de cette première barre. Cette façon de procéder permet en effet d'éviter des problèmes de cintrage avec des barres trop épaisses. Elle permet aussi de former une couronne périphérique comprenant plusieurs nuances d'acier superposées. Ainsi on peut notamment fabriquer des scies ayant une denture composée de deux aciers différents, par exemple un acier plus dur pour la pointe des dents et un acier plus élastique pour la racine des dents.

Le procédé de fabrication des ébauches pour les scies et cisailles selon l'invention, ainsi que la machine 30 utilisée pour la mise en oeuvre de ce procédé, sont décrits en se référant aux Figures 5 à 7.

La machine 30 montrée sur les Figures 5 à 7 comprend un bâti mécano-soudé 32. Sur ce bâti 32 est monté un moteur d'entraînement 34 muni d'un réducteur/variateur 36. Ce dernier comprend un arbre de sortie 38 sur lequel est monté le disque support 12 à l'aide de son alésage central 13 décrit plus haut. Des moyens de fixation 42, comprenant deux flasques de fixation 42, fixent le disque support 12 sur l'arbre 38. La barre 16, dont la longueur correspond sensiblement à la circonférence du disque support 12, est entraînée en translation à l'aide d'un dispositif d'entraînement 44 muni de galets à gorge 46. A la sortie du dispositif d'entraînement 44 la barre 16 est injectée dans un dispositif de guidage 48 entourant le bord périphérique du disque support 12 sur environ 180°. Ce dispositif de guidage 48, qui n'est montré que sur la Figure 5, comprend des galets 50 disposés de façon à cintrer la barre 16 et à l'appliquer en direction radiale contre le bord du disque support 12, ainsi que des galets 52 disposés de part et d'autre du bord du disque support 12, de façon à guider la barre 16 latéralement. Un premier dispositif de chauffage 54 est localisé à l'entrée du dispositif de guidage 48. Ce dispositif de chauffage 54 permet de réchauffer la barre 16 à une température de 200 à 300°C, afin de faciliter son cintrage. Un deuxième dispositif de chauffage 56 sert à préchauffer la barre cintrée et le bord du disque support 16 à une température d'environ 500°C avant soudage.

On a vu que le soudage de la barre cintrée au bord du disque se fait par rayon laser. A cet effet, la machine 32 comprend une tête de soudage laser 60 montée sur un bras de support 62. Ce dernier est avantageusement conçu de façon à permettre un ajustage de la position de la tête laser 60 dans un plan vertical et dans un plan horizontal. Il sera noté que le point de soudage se situe de préférence à environ 180° du point d'entrée de la barre 16 dans le dispositif de guidage 48. Ainsi, le frottement entre le bord du disque support 12 et la barre 16 dans le dispositif de guidage 48 contribue à la synchronisation des vitesses périphériques de la barre 16 et du bord du disque support 12 au point de soudage, et il est garanti qu'au point de soudage le jeu entre la barre 16 et le bord périphérique du disque support 12 est inférieur à un dixième de millimètre. Reste à noter que l'agencement du dispositif d'entraînement 44 et du dispositif de guidage sur le bâti 32 sont avantageusement ajustables, de façon à pouvoir fabriquer des ébauches 10 de différents diamètres sur une même machine 30.

Sur la Figure 5, la barre cintrée 16 est déjà soudée au bord périphérique du disque support 12 sur une distance angulaire d'environ 30°. Après exécution du soudage sur 360°, il reste à souder les deux bouts de la barre 16 l'un à l'autre. Ensuite l'ébauche 10 peut être soumise à un recuit de stabilisation. Cette ébauche 10 peut ensuite recevoir, comme décrit plus haut, soit un finissage d'une lame de scie circulaire, soit un finissage d'une lame de cisaille circulaire.

## Revendications

1. Procédé pour fabriquer une ébauche (10) d'un outil de coupe circulaire , ladite ébauche (10) comprenant un disque support (12) et une couronne d'un acier spécial qui sont assemblés par soudage ; **caractérisé en ce que :**
on prend une barre (16) d'un acier spécial ;
on cintre ladite barre (16) autour du bord dudit disque support (12) en entraînant ce dernier en rotation et en appliquant ladite barre (16) fermement contre ledit bord dudit disque support (12) sur une distance angulaire d'environ 180° en amont d'un point de soudage fixe dans l'espace; et audit point de soudage, on soude ladite barre cintrée (16) audit bord dudit disque support (12) au moyen d'un rayon laser.

2. Procédé selon la revendication 1, **caractérisé en ce que** ladite barre (16) est préchauffée dans une première étape, au début de son cintrage, à une température de 200° à 300°C, et dans une deuxième étape, ladite barre cintrée (16) et le bord dudit disque support (12) sont portés à une température d'environ 500°C.

3. Procédé selon la revendication 1 ou 2, **caractérisé en ce que** l'on soumet ladite ébauche (10) à un recuit.

4. Procédé selon l'une quelconque des revendications 1 à 3, **caractérisée en ce que** ledit disque support (12) est constitué d'un acier au carbone, et **en ce que** ladite barre cintrée (16) est constituée d'un acier spécial choisi en fonction de ses caractéristiques de coupe.

5. Procédé pour fabriquer une lame de scie circulaire, **caractérisé en ce que**:
l'on fabrique une ébauche (10) de ladite lame de scie circulaire selon un procédé tel que revendiqué dans une quelconque des revendications 1 à 4; et
l'on usine ladite denture (16') dans ladite barre cintrée (16) soudée au disque support (12).

6. Procédé selon la revendication 5, **caractérisé en ce que** ladite barre cintrée (16) soudée au disque support (12) déborde de chaque côté ledit disque support (12), et **en ce que**, avant d'usiner ladite denture (16'), on usine les flancs latéraux (22, 24) de ladite barre cintrée (16) soudée au disque support (12), de façon à ce qu'elle présente une section trapézoïdale, dont la largeur augmente à partir de ladite soudure vers la périphérie.

7. Procédé selon la revendication 5 ou 6, **caractérisé en ce que** l'on soumet ladite denture (16') à une trempe.

8. Procédé pour fabriquer une lame de cisaille circulaire, **caractérisé en ce que**:
l'on fabrique une ébauche (10) de ladite lame de cisaille circulaire selon un procédé tel que revendiqué dans une quelconque des revendications 1 à 4; et
l'on soumet ladite barre cintrée (16) soudée au disque support (12) à un usinage final.

9. Machine pour fabriquer une ébauche (10) d'un outil de coupe circulaire, selon le procédé de l'une quelconque des revendications 1 à 4, **caractérisée par**:
un support rotatif (38) pour y monter ledit disque support (12);
des moyens de guidage (48) qui entourent le bord dudit disque support (12) sur une longueur angulaire d'environ 180°, de façon à recevoir ladite barre, la cintrer et l'appliquer fermement contre ledit bord; et
une tête de soudage laser (60) disposée en aval desdits moyens de guidage (48).

10. Machine selon la revendication 9, **caractérisée par** des moyens d'entraînement en translation (44) de ladite barre (16), lesdits moyens d'entraînement en translation (44) étant agencés de façon à pouvoir injecter ladite barre (16) dans lesdits moyens de guidage (48).

11. Machine selon la revendication 9 ou 10, **caractérisée par** au moins un dispositif de chauffage (54, 56).

## Patentansprüche

1. Verfahren zur Herstellung eines Rohlings (10) eines kreisförmigen Schneidwerkzeugs, wobei der Rohling (10) eine Trägerscheibe (12) und einen Kranz aus Spezialstahl umfasst, die miteinander verschweißt werden, **dadurch gekennzeichnet, dass** man
einen Stab (16) eines Spezialstahls nimmt,
den Stab (16) um den Rand der Trägerscheibe (12) herum biegt, indem Letztere in Rotation gebracht und der Stab (16) am Rand der Trägerscheibe (12) im Winkelabstand von etwa 180° oberhalb eines räumlich feststehenden Schweißpunktes fest angesetzt wird, und
man am Schweißpunkt den gebogenen Stab (16) an den Rand der Trägerscheibe (12) mittels Laserstrahls anschweißt.

2. Verfahren nach Anspruch 1 **dadurch gekennzeichnet, dass** der Stab (16) in einer ersten Phase zu Beginn seiner Biegung auf eine Temperatur von 200° bis 300° C vorerhitzt wird und der gebogene Stab (16) und der Rand der Trägerscheibe (12) in einer zweiten Phase auf eine Temperatur von etwa 500° C erhitzt werden.

3. Verfahren nach Anspruch 1 oder 2 **dadurch gekennzeichnet, dass** man den Rohling (10) einem Ausglühen unterzieht.

4. Verfahren nach irgendeinem der Ansprüche 1 bis 3 **dadurch gekennzeichnet, dass** die Trägerscheibe (12) aus Kohlenstoffstahl und der gebogene Stab (16) aus einem Spezialstahl besteht, der nach seinen Schnitteigenschaften ausgewählt wird.

5. Verfahren zur Herstellung eines kreisförmigen Sägeblatts **dadurch gekennzeichnet, dass**
man einen Rohling (10) des kreisförmigen Sägeblatts nach einem Verfahren herstellt, wie es in irgendeinem der Ansprüche 1 bis 4 beansprucht wird und
man die Zahnung (16') auf dem an die Trägerscheibe (12) angeschweißten gebogenen Stab (16) ausführt.

6. Verfahren nach Anspruch 5 **dadurch gekennzeichnet, dass** der an die Trägerscheibe (12) angeschweißte gebogene Stab (16) auf jeder Seite über die Trägerscheibe (12) hinausragt und vor Ausführung der Zahnung (16') die seitlichen Flanken (22, 24) des an die Trägerscheibe (12) angeschweißten gebogenen Stabs (16) derart bearbeitet werden, dass sie einen trapezförmigen Schnitt aufweisen, dessen Breite von der Schweißung an zur Peripherie hin zunimmt.

7. Verfahren nach Anspruch 5 oder 6 **dadurch gekennzeichnet, dass** man die Zahnung (16') einer Härtung unterzieht.

8. Verfahren zur Herstellung eines kreisförmigen Scherenblatts **dadurch gekennzeichnet, dass** man
einen Rohling (10) des kreisförmigen Scherenblatts nach einem Verfahren herstellt, wie es in irgendeinem der Ansprüche 1 bis 4 beansprucht wird, und
den an die Trägerscheibe (12) angeschweißten gebogenen Stab (16) einer Endbearbeitung unterzieht.

9. Maschine zur Herstellung eines Rohlings (10) eines kreisförmigen Schneidwerkzeugs nach dem Verfahren irgendeines der Ansprüche 1 bis 4 **gekennzeichnet durch**
eine rotierende Auflage (38), um darauf die Trägerscheibe (12) zu montieren,
Führungsmittel (48), die den Rand der Trägerscheibe (12) auf einer Winkellänge von etwa 180° umgeben, um den Stab aufzunehmen, zu biegen und fest am Rand anzusetzen, und
einen Laserschweißkopf (60), der unterhalb der Führungsmittel (48) angebracht ist.

10. Maschine nach Anspruch 9 **gekennzeichnet durch** Translationsantriebsmittel (44) zur Translation des Stabs (16), wobei diese Translationsantriebsmittel (44) so angeordnet sind, dass der Stab (16) in die Führungsmittel (48) eingepresst werden kann.

11. Maschine nach Anspruch 9 oder 10 **gekennzeichnet durch** mindestens eine Erhitzungsvorrichtung (54, 56).

## Claims

1. Method of manufacturing a preform (10) for a circular cutting tool, said preform (10) comprising a support disc (12) and a ring made of a special steel which are assembled by welding, **characterized in that:**
a rod (16) of a special steel is taken;
said rod (16) is bent around the edge of said support disk (12) by rotating the latter and by applying said rod (16) firmly against said edge of said support disc (12) over an angular distance of about 180° upstream from a welding point fixed in space; and
at said welding point, said bent rod (16) is welded to said edge of said support disc (12) by means of a laser beam.

2. Method according to Claim 1, **characterized in that** said rod (16) is preheated in a first step, at the start of its bending, to a temperature of 200° to 300°C, and in a second step, said bent rod (16) and the edge of said support disc (12) are taken to a temperature of about 500°C.

3. Method according to Claim 1 or 2, **characterized in that** said preform (10) is subjected to annealing.

4. Method according to any one of Claims 1 to 3, **characterized in that** said support disc (12) consists of a carbon steel, and **in that** said bent rod (16) consists of a special steel chosen according to its cutting characteristics.

5. Method for manufacturing a circular saw blade, **characterized in that**:
a preform (10) for said circular saw blade is manufactured according to a method as claimed in any one of claims 1 to 4; and
said tooth (16') is machined in said bent rod (16) welded to the support disc (12).

6. Method according to Claim 5, **characterized in that** said bent rod (16) welded to the support disc (12) retrieves from each side of said support disc (12), and **in that**, before machining said tooth (16'), the side walls (22, 24) of said bent rod (16) welded to the support disc (12) are machined, so that it has a trapezoidal cross section, the width of which increases from said weld towards the periphery.

7. Method according to Claim 5 or 6, **characterized in that** said tooth (16') is subjected to tempering.

8. Method for manufacturing a circular shear blade, **characterized in that**:
a preform (10) of said circular shear blade is manufactured according to a method as claimed in any one of Claims 1 to 4; and
said bent rod (16) welded to the support disc (12) is subjected to final machining.

9. Machine for manufacturing a preform (10) of a circular cutting tool, according to the method of any one of Claims 1 to 4, **characterized by**:
a rotary support (38) for mounting said support disc (12) thereon;
guiding means (48) which surround the edge of said support disc (12) over an angular length of about 180°, so as to accommodate said rod, bend it and apply it firmly against said edge; and
a laser welding head (60) placed downstream of said guiding means (48).

10. Machine according to Claim 9, **characterized by** means (44) for driving said rod (16) in translation, said translational drive means (44) being arranged so that said rod (16) can be inserted into said guiding means (48).

11. Machine according to Claim 9 or 10, **characterized by** at least one heater (54, 56).
